# EUROPÄISCHE PATENTANMELDUNG

(11) **EP 4 520 422 A1**
(43) Veröffentlichungstag der Anmeldung: **12.03.2025**
(21) Anmeldenummer: 24195936.0
(22) Anmeldetag: 22.08.2024
(51) Int. Cl.: B01D 45/08, B05B 14/43

(54) **FILTERMODUL UND VERFAHREN**

(30) Priorität: 08.09.2023 DE 102023124277
(71) Anmelder: Kara, Jürgen, 96465 Neustadt/Coburg (DE)
(72) Erfinder: Kara, Jürgen, 96465 Neustadt/Coburg (DE)
(74) Vertreter: Isarpatent

(57) **Zusammenfassung**

Die vorliegende Erfindung betrifft ein Filtermodul, zur Abscheidung von Partikeln aus verunreinigter Luft, mit einem Aufnahmeelement, das eine Eintrittsseite, für den Eintritt eines zu reinigenden Luftstroms, und eine Austrittsseite, für den Austritt des gereinigten Luftstroms, aufweist, wobei die Eintrittsseite und die Austrittsseite gegenüberliegend am Aufnahmeelement angeordnet sind, zumindest einem Filtereinsatz, der in dem Aufnahmeelement aufgenommen ist, wobei der Filtereinsatz zumindest eine Querwand mit zumindest einer Öffnung aufweist, wobei an der Öffnung zumindest ein Luftleitelement angeordnet ist, das bezüglich einer Ebene der Querwand geneigt angeordnet ist, sodass der Luftstrom von der Eintrittsseite in Richtung der Austrittsseite durch das Luftleitelement ablenkbar ist. Die Erfindung betrifft weiterhin ein Verfahren zur Herstellung einer Querwand für ein solches Filtermodul.

## Beschreibung

### GEBIET DER ERFINDUNG

Die vorliegende Erfindung betrifft ein Filtermodul zur Abscheidung von Partikeln aus verunreinigter Luft. Die Erfindung betrifft weiterhin ein Verfahren zur Herstellung einer Querwand für ein solches Filtermodul.

### TECHNISCHER HINTERGRUND

Filtermodule werden für unterschiedliche Anwendungen eingesetzt. Beispielsweise können diese im Bereich von Sprühkabinen zur Aufnahme von Farbnebel eingesetzt werden. Die Filtermodule dienen dabei zur Reinigung der von der Sprühkabine abgeführten Luft. Die Farbpartikel, welche nicht an einem zu besprühenden Objekt anhaften, können durch die Filtermodule abgeschieden werden. Derartige Filtermodule können demnach ebenso als Abscheider bzw. Abscheidermodule bezeichnet werden.

Für gewöhnlich besitzen Filtermodule eine Eintrittsseite, die für den Eintritt eines zu reinigenden Luftstroms ausgebildet ist. Auf einer gegenüberliegenden Seite ist bevorzugt eine Austrittsseite angeordnet, die zum Austritt des gereinigten Luftstroms dient.

Beispielsweise können mehrere gleichartige Filtermodule nebeneinander bzw. aufeinander angeordnet werden, sodass eine zusammenhängende Fläche entsteht, die beispielsweise unterhalb oder auch seitlich neben dem zu besprühenden Objekt angeordnet werden kann. Dabei sind alle Eintrittsseiten auf einer Seite der zusammenhängenden Fläche angeordnet. Bevorzugt wird sozusagen hinter den Filtermodulen ein Unterdruck erzeugt, sodass ein Luftstrom durch die Filtermodule entsteht, der von der Eintrittsseite in Richtung der Austrittsseite strömt. Durch den Luftstrom wird die zu reinigende Luft durch die Filtermodule hindurchgeführt und gereinigt, indem die Partikel innerhalb der Filtermodule anhaften bzw. an den Filtermodulen abgeschieden werden.

Aus dem Stand der Technik sind Filtermodule bekannt, die aus einem Papierstoff ausgebildet ist. Innerhalb des Filtermoduls sind zumindest zwei Wände angeordnet, die quer zur Richtung des eintretenden Luftstroms angeordnet sind. Die Wände weisen jeweils Öffnungen auf, wobei die Öffnungen der Wände von der Eintrittsseite in Richtung der Austrittsseite kleiner werden und/oder versetzt zueinander angeordnet sein können. Durch die Wände entstehen Kammern innerhalb des Grundkörpers. Der zu reinigende Luftstrom wird mäanderförmig durch die unterschiedlich angeordneten Öffnungen in den hintereinander angeordneten Wänden geführt.

Es ist ebenso möglich, die Wände über eine quer dazu ausgerichtete Stabilisierungswand miteinander zu verbinden. Mehrere derartige Reinigungsstrukturen können hintereinander innerhalb des Hohlkörpers angeordnet werden und so das Filtermodul ausbilden. Durch die Öffnungen in den Wänden sowie in der Stabilisierungswand wird die zu reinigende Luft mäanderförmig abwechselnd durch die Wände und durch die Stabilisierungswände durch das Filtermodul geleitet.

Nachteilig ist bei derartigen Filtermodulen, dass die Anhaftungen der Partikel innerhalb des Filtermoduls sehr unterschiedlich, d. h. ungleich verteilt, ausfällt. Dies resultiert aus der mäanderförmigen Führung des Luftstroms, wobei sich der Luftstrom nach Eintritt auf der Eintrittsseite in Öffnungen in unterschiedlichen Raumrichtungen umgeleitet wird. Durch diese reine Umleitung des Luftstroms, beispielsweise nach links, rechts, oben oder unten innerhalb des Filtermoduls, erfolgt eine abrupte und sehr starke Abbremsung, wodurch der Luftstrom zunehmend an Geschwindigkeit verliert. In einer ersten Kammer zwischen einer ersten und einer zweiten Wand, die der zu reinigende Luftstrom als erstes erreicht, werden folglich die meisten Partikel abgeschieden. Weiter hinten angeordnete Kammern werden nur noch von wenigen Partikeln erreicht. Zudem wird ein erhöhter Energiebedarf benötigt, um den Luftstrom auch in den hinteren Kammern in einer benötigten und effektiven Geschwindigkeit aufrecht zu halten. Die Effizienz und Lebensdauer jedes Filtermoduls werden dadurch verringert. Oft müssen die Filtermodule bereits ausgetauscht werden, wenn weiter hinten angeordnete Bereiche innerhalb des Filtermoduls erst sehr geringe Partikelansammlungen aufweisen.

Aus dem Stand der Technik ist es ebenso bekannt, einzelne Reinigungsstrukturen, die hintereinander innerhalb des Grundkörpers angeordnet sind, einzeln zu entnehmen. Dadurch kann die Reinigungsstruktur, welche am nächsten an der Eintrittsseite angeordnet ist, ausgetauscht werden.

Während des Betriebs in einer Sprungkabine, wobei meist mehrere baugleiche Filtermodule nebeneinander bzw. aufeinander zu einer zusammenhängenden Fläche angeordnet sind, ist der Austausch einzelner Reinigungsstrukturen aus jedem einzelnen Filtermodul jedoch nur unter großem Zeitaufwand möglich. Insbesondere muss zum Austausch einer Reinigungsstruktur aus jedem einzelnen Filtermodul jeder einzelne Hohlkörper geöffnet werden. Dies ist bei nebeneinander sowie aufeinander angeordneten Filtermodulen nicht möglich. Demnach müsste die zusammenhängende Fläche aus Filtermodulen zunächst auseinandergebaut werden, sodass jedes einzelne Filtermodul zugänglich ist. Daraus resultiert ein enormer Zeitaufwand. In der Praxis ist der Austausch einzelner Reinigungselemente daher kaum möglich. Folglich werden erfahrungsgemäß die Filtermodule bereits dann komplett ausgetauscht, wenn lediglich das erste Reinigungselement derart verschmutzt ist, dass der Luftstrom dieses eine Reinigungselement nicht mehr durchströmen kann.

### ZUSAMMENFASSUNG DER ERFINDUNG

Vor diesem Hintergrund liegt der vorliegenden Erfindung die Aufgabe zugrunde, ein verbessertes Filtermodul anzugeben, das eine verbesserte Standzeit aufweist. Insbesondere ist es Aufgabe der Erfindung, ein Filtermodul mit einem bessern Abscheideverhalten bereitzustellen, wobei ein geringerer Energiebedarf zum Betrieb benötigt wird.

Erfindungsgemäß wird diese Aufgabe durch ein Filtermodul mit den Merkmalen des Patentanspruchs 1 und/ oder durch ein Verfahren mit den Merkmalen des Patentanspruchs 15 gelöst.

Demgemäß ist vorgesehen:
Ein Filtermodul zur Abscheidung von Partikeln aus verunreinigter Luft, insbesondere zur Abscheidung von Farbpartikeln aus einem Luftstrom, mit einem Aufnahmeelement, das eine Eintrittsseite, für den Eintritt eines zu reinigenden Luftstroms, und eine Austrittsseite, für den Austritt des gereinigten Luftstroms, aufweist, wobei die Eintrittsseite und die Austrittsseite gegenüberliegend am Aufnahmeelement angeordnet sind, zumindest einem Filtereinsatz, der in dem Aufnahmeelement aufgenommen ist, wobei der Filtereinsatz zumindest eine Querwand mit zumindest einer Öffnung aufweist, wobei an der Öffnung zumindest ein Luftleitelement angeordnet ist, das bezüglich einer Ebene der Querwand geneigt angeordnet ist, sodass der Luftstrom von der Eintrittsseite in Richtung der Austrittsseite durch das Luftleitelement ablenkbar ist.
Ein Verfahren zur Herstellung einer Querwand für ein erfindungsgemäßes Filtermodul, wobei die Querwand und das Luftleitelement einteilig ausgeformt sind, wobei durch ein Pressverfahren die Neigung des Luftleitelements relativ zu der Querwand ausgebildet wird, wobei insbesondere durch ein sich versteifenden Klebematerial das Luftleitelement in einem vorbestimmten Winkel bezüglich der Ebene der Querwand unbeweglich fixiert wird.

Die der vorliegenden Erfindung zugrundeliegende Erkenntnis besteht darin, dass durch eine gleichmäßige Verteilung der Partikel zwischen der Eintrittsseite und der Austrittsseite ein langlebiges sowie effektives Filtermodul ausgebildet werden kann.

Die der vorliegenden Erfindung zugrundeliegende Idee besteht darin, die Luftströmung innerhalb des Filtermoduls zu beschleunigen, um eine ausgeglichene Anhaftung der Partikel an allen Querwänden innerhalb des Aufnahmeelements zu ermöglichen und gleichzeitig Energie bei Erzeugung des Luftstroms einzusparen. Dabei wird die Idee mit zumindest einem Luftleitelement umgesetzt, wobei der Luftstrom durch das Luftleitelement zumindest abschnittsweise geführt in Richtung Austrittsseite strömt. Durch eine schräg zur Strömungsrichtung ausgerichtete Oberfläche des Luftleitelements kann dabei eine Führung des Luftstroms erfolgen, anstatt diesen einfach umzulenken. Der Luftstrom kann beispielsweise über die Oberfläche des Luftleitelements streichen, wobei durch die Ausrichtung schräg zu einer Verbindungseben zwischen Eintrittsseite und Austrittsseite eine Beschleunigung des Luftstroms erfolgen kann, da die Strömung hinter der Öffnung quasi eingeschnürt wird, wodurch sich gemäß des Venturi-Prinzips der Luftstrom beschleunigt.

Ferner ist es auf diese Weise vorteilhaft möglich, eine Luftführung in einer beliebigen Richtung relativ zu der Ebene der Querwand auszubilden, ohne eine Längswand einzusetzen und ohne benachbarte Querwände miteinander zu verbinden. Mit anderen Worten kann ein Strömungsbereich hinter und/oder vor der Öffnung beeinflusst werden. Dadurch, dass das Luftleitelement bezüglich der Ebene der Querwand geneigt angeordnet ist, insbesondere in einem Winkel ungleich 90 ° bezüglich der Querwand, kann eine Ablenkung des Luftstroms direkt vor und/oder direkt nach der Öffnung erfolgen.

Vorteilhafterweise ist das zumindest eine Luftleitelement bezüglich der Ebene der Querwand und bezüglich einer 90° dazu angewinkelten Ebene geneigt. Demnach verläuft das Luftleitelement insbesondere schräg und kann eine Luftleitung in eine beliebige Richtung innerhalb des Filterelements ermöglichen. Insbesondere kann da Luftleitelement in einem Winkel zwischen 20° und 80° bezüglich der genannten Ebenen geneigt sein.

Vorteilhafterweise ist das Luftleitelement als eine Art Flügelelement ausgebildet, das die Querwand berührt oder kontaktiert jedoch mit keinem weiteren Element verbunden ist.

Eine geneigte Anordnung des Luftleitelements ermöglicht insbesondere, dass die Luftströmung gezielt beschleunigt werden kann, sodass innerhalb des Filtereinsatzes eine ausreichende Geschwindigkeit für ein optimiertes Abscheidverhalten erzielt werden kann. So kann das Luftleitelement eine freie Seitenkante aufweisen, die eine Abrisskante für die Luftströmung ausbildet. An der Abrisskante können sich Tröpfchen der Abgeschiedenen Partikel bilden. Die Abrisskante kann ein Abtropfverhalten von daran abgeschiedenen Partikeln erleichtern, sodass die Standzeit des Filtermoduls verlängert werden kann. Insbesondere können abgeschiedene Partikel nach unten Abtropfen, wobei der Filtereinsatz weniger schnell durch Partikel gesättigt ist. Insbesondere im Vergleich zu Ausführungen aus dem Stand der Technik, bei welchen die Querwände mit Längswänden verbunden sind, kann dadurch eine Verlängerung der Standzeit und eine Verbesserung des Abscheideverhaltens von mehr als 100 % erreicht werden. Eine derartige Tröpfchenbildung ist mit den bekannten Filtermodulen nicht möglich, da diese keine freien Abrisskanten innerhalb des Filtermoduls aufweisen.

Als Querwand ist ein Element zu verstehen, das quer zur Luftströmung innerhalb des Aufnahmeelements angeordnet ist. Dadurch, dass der freie Luftstrom durch die Öffnung teilweise durch das Luftleitelement beeinflusst wird, sodass der Luftstrom von der Eintrittsseite in Richtung der Austrittsseite vor und/oder nach der Öffnung abgelenkt wird, ist ein Luftstrom ausbildbar, der beliebig umgelenkt und beschleunigt werden kann. Die Luft wird folglich nicht einfach durch Öffnungen hindurchgeführt, sondern hinter oder vor der Öffnung gezielt entlang des Luftleitelements geleitet. Das Luftleitelement kann daher als eine Art Leitklappe verstanden werden, durch welche der Luftstrom nach oder vor der Öffnung gezielt entlanggeführt wird. Insbesondere kann dabei das Strömungsverhalten durch die Öffnung gezielt beeinflusst werden, wobei der Luftstrom gezielt beschleunigt werden kann.

Als Öffnung ist eine Ausnehmung innerhalb der Querwand zu verstehen. Die Öffnung kann beliebige Formen aufweisen. Insbesondere ist die Öffnung rechteckig bzw. quadratisch ausgeformt.

Darüber hinaus besitzt ein derartiges Filtermodul einen einzigen Filtereinsatz, der über die komplette Lebensdauer des Filtermoduls nicht ausgetauscht werden muss, wobei alle Elemente des Filtereinsatzes bis zur Unbrauchbarkeit, d. h. bis zur Verstopfung durch abgeschiedene Partikel, verwendet werden können.

Insbesondere kann das Abscheidverhalten um mehr als 100 % im Vergleich zu bekannten Filtermodulen verbessert werden. Dies kann insbesondere dadurch umgesetzt werden, dass durch das Luftleitelement eine gezielte Umleitung und Führung des Luftstroms nach Passage der Öffnung erfolgt, sodass der Luftstrom innerhalb des Filtereinsatzes durch die Kombination der Öffnung mit dem zumindest einen Luftleitelement beschleunigt wird. Daher kann die Standzeit und das Abscheidverhalten um mindestens 100 % im Vergleich zu Filtermodulen aus dem Stand der Technik erhöht werden. Insbesondere kann Energie eingespart werden, die im Stand der Technik zur Ausbildung des Luftstroms eingesetzt wird. Die Einsparung an Energie beträgt mindestens 30 % im Vergleich zu Filtermodulen aus dem Stand der Technik.

Da insbesondere das Abscheidverhalten um mehr als 100 % verbessert werden kann, können nasse Lacke nach unten abtropfen. Das Filtermodul kann einen hohen Füllstand erreichen und schwer werden. Um insbesondere ein Überlaufen des Filtermoduls zu vermeiden, kann eine Art Auffangwanne oder Wanne unter dem Filtermodul bzw. unter dem Filtereinsatz angeordnet werden. Diese kann aus demselben Material wie das Filtermodul ausgebildet sein, insbesondere aus einem Pappmaterial, bevorzugt mit einer einseitig nassfesten Beschichtung. Dadurch kann ein Überlaufen des Filtermoduls und ein Verschmutzen der Anlage verhindert werden, wenn die Nassen Lacke in der Auffangwanne bzw. Wanne aufgefangen werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform können an der zumindest eine Querwand zwei Luftleitelemente angeordnet sein, sodass eine Strömungsöffnung ausgebildet wird, die versetzt zu der Öffnung in der Querwand ausgebildet ist, und der Luftstrom durch die Strömungsöffnung strömen kann. Die Strömungsöffnung wird bevorzugt zwischen den beiden Luftleitelementen ausgebildet, wobei bevorzugt eine jeweilige Seitenkante jedes Luftleitelements eine seitliche Begrenzung der Strömungsöffnung ausbilden kann. Versetzte bedeutet insbesondere, dass die Strömungsöffnung, insbesondere bezüglich einer Ebene der Querwand, versetzt angeordnet ist, sodass eine Art Düse ausgebildet werden kann, durch welche der Luftstrom eingeengt und beschleunigt wird. Insbesondere ist die Strömungsöffnung versetzt zu der Querwand angeordnet. Eine Beschleunigung kann dabei nach dem Venturi-Prinzip erfolgen. Die Strömungsöffnung liegt bevorzugt näher an der Austrittsseite als die Öffnung in der Querwand, sodass der Luftstrom in Richtung der Austrittsseite beschleunigt wird. Insbesondere kann eine Art Flachdüse ausgebildet werden. Dadurch kann ein Strömungsbereich hinter der Öffnung beeinflusst werden, ohne eine Längswand einzusetzen.

Sind die Luftleitelemente derart ausgerichtet, dass die Strömungsöffnung näher an der Eintrittsseite liegt als die Ebene der Querwand, so kann eine Art Speicherfläche bzw. Aufnahmebereich für die Partikel ausgebildet werden, wobei sich in diesem Bereich abgeschiedene Partikel ansammeln können.

Die verbleibende Wand zwischen den Öffnungen kann ebenso zur Aufnahme der Partikel dienen, und eine Art Rahmenelement ausbilden. Die Wand kann aus einem Papiermaterial ausgebildet sein, sodass die Öffnungen einfach herausgestanzt oder herausgeschnitten werden können.

Gemäß einer vorteilhaften Ausführungsform kann die zumindest eine Querwand drei Öffnungen aufweisen, wobei an jeder Öffnung zumindest ein Luftleitelement angeordnet ist. Dadurch kann jede Öffnung um ein Vielfaches kleiner als die Fläche der Querwand ausgebildet sein, wobei die Luftströmung an unterschiedlichen Positionen die Querwand durchströmen kann. Insbesondere kann hinter jeder Öffnung zumindest ein Luftleitelement angeordnet sein, das die Luftströmung hinter der Öffnung in Richtung der Austrittsseite in eine gewünschte Richtung geneigt zu der Ebene der Querwand umlenkt.

Gemäß einer vorteilhaften Ausführungsform kann die zumindest eine Öffnung schlitzförmig ausgebildet sein, wobei die Öffnung nahezu über eine komplette Breite oder eine komplette Höhe der Querwand verläuft. Beispielsweise können mindestens drei, insbesondere drei oder vier, Schlitze parallel zueinander angeordnet werden, wobei an zumindest zwei Schlitzen identische Luftleitelemente ausgeformt werden. Die äußersten Schlitze können andersartige Luftleitelemente aufweisen, als die innenliegenden Schlitze bzw. der innenliegende Schlitz, sodass eine Luftströmung gezielt geleitet werden kann, und in den Randbereichen des Filtereinsatzes keine Verwirbelungen auftreten. Ebenso können alle Schlitze identische Luftleitelemente aufweisen. In einer bevorzugten Ausführung können die eben beschriebenen zwei Ausführungsformen abwechselnd hintereinander angeordnet werden, um einen Filtereinsatz auszubilden. Die Luftleitelemente benachbarter Querwände sind dabei bevorzugt jeweils entweder zueinander ausgerichtet oder voneinander wegweisend. So kann eine gezielte Luftleitung erzielt werden, die eine Mehrzahl an Speicherflächen und eine Mehrzahl an Düsen zur Beschleunigung des Luftstroms aufweist.

Gemäß einer vorteilhaften Ausführungsform kann eine Mehrzahl an Querwänden parallel zueinander in dem Aufnahmeelement angeordnet sein, wobei bei hintereinander angeordneten Querwänden die Öffnungen versetzt zueinander angeordnet sind. Beispielsweise kann dabei eine Querwand mit drei Schlitzen abwechselnd mit einer Querwand mit vier Schlitzen angeordnet werden, um die versetzt zueinander angeordneten Schlitze zu erzielen.

Mit anderen Worten sind bevorzugt mehrere Querwände derart hintereinander angeordnet, dass die Öffnungen an unterschiedlichen Positionen an der Querwand ausgebildet werden. Die Positionen können nebeneinander angeordnet sein und/oder sich überlappen. So kann die Luftströmung an unterschiedlichen Positionen unterschiedlich abgebremst und/oder umgelenkt werden, wobei insbesondere eine wellenförmige und laminare Strömung ausgebildet werden kann.

Gemäß einer vorteilhaften Ausführungsform können die Luftleitelemente benachbarter Querwände bezüglich der Ebene der jeweiligen Querwand auf gegenüberliegenden Seiten ausgerichtet sein, sodass die Luftleitelemente benachbarter Querwände entweder zueinander ausgerichtet sind, oder voneinander weg weisen. Dadurch können in einer Querwand Düsen ausgebildet werden, und in der darauffolgenden Querwand Speicherflächen bzw. Aufnahmebereiche für Partikel. Dies kann sich wiederholen, sodass abwechselnd Düsen und Speicherflächen innerhalb des Filtereinsatzes ausgebildet werden. Die Speicherflächen sind insbesondere als u-förmige oder v-förmige Bereiche ausgebildet, wobei sich darin die Partikel ansammeln können. Die Luft kann daher kontinuierlich beschleunigt werden, während kontinuierlich Speicherflächen zur Abscheidung von Partikeln bereitgestellt werden. Die Ablagerung der Partikel erfolgt insbesondere dadurch, dass die Partikel entsprechend dem Newton-Gesetz in der Flugbahn nicht umgelenkt werden, während die Luft umgelenkt wird. Die Ablagerung kann daher in den Speicherflächen erfolgen, während die Luft zur nächsten Düse strömt. Durch Ablagerung der Partikel werden die Durchgänge weitere verkleinert, wobei die Düsenfunktion weiter gesteigert werden kann.

Gemäß einer vorteilhaften Ausführungsform kann der Filtereinsatz zumindest drei, insbesondere drei bis zehn, Querwände aufweisen. Die Querwände können beispielsweise abwechselnd identisch Öffnungen und identisch ausgerichtete Luftleitelemente aufweisen, sodass ein geschlängelter Luftpfad ausgebildet werden kann.

Bevorzugt sind die Querwände zumindest teilweise mit unterschiedlichen Abständen zueinander angerordnet. In einer Ausführungsform können die Querwände, die sich näher an der Eintrittsseite befinden mit einem größeren Abstand zueinander angeordnet als die Querwände, die sich näher an der Austrittsseite befinden. Dadurch kann sichergestellt werden, dass auch im Bereich der Eintrittsseite eine Verstopfung durch anhaftende Partikel vermieden wird, wenn bereits eine Vielzahl an Partikel an den dortigen Querwänden anhaftet.

In einer weiteren Ausführung können die Querwände abwechselnd mit einem größeren und einen kleineren Abstand ausgebildet sein. Dadurch kann vor einer Düse ein größerer Abstand, insbesondere ein größerer Hohlraum, zur nächsten Querwand vorliegen als hinter der Düse, sodass genügend Luft angesaugt werden kann. Insbesondere sind vor der Düse die Luftleitelemente der zuvor angeordneten Querwand in Richtung der Düse ausgerichtet. Dadurch findet innerhalb des Spaltes zwischen den beiden Querwänden eine Luftführung durch die Luftleitelemente statt. Mit anderen Worten werden die größeren Abstände bzw. Hohlräume teilweise von den Luftleitelementen überspannt, sodass in den größeren Hohlräumen eine Führung der Luft in eine gewünschte Richtung erfolgen kann.

In einer weiteren Ausführungsform können die Querwände alle gleichbeabstandet zueinander angeordnet sein. Die unterschiedlichen Filterstärken können durch die Größe und Geometrie der Öffnungen sowie der Größe, Geometrie und Neigung der Luftleitelemente ausgebildet werden.

Gemäß einer vorteilhaften Ausführungsform kann das Luftleitelement mit einer Seitenkante die Querwand kontaktieren, und es können insbesondere übrige Seitenkanten des Luftleitelements als freie Kanten ausgebildet sein. Beispielsweise kann das Luftleitelement eine rechteckige Form aufweisen. Die Seitenkante, mit welcher das Luftleitelement die Querwand kontaktiert, kann eine lange Seitenkante der rechteckigen Form sein. Dadurch kann eine Art Flügel ausgebildet werden, der mit einer Seitenkante mit der Querwand verbunden ist, und mit den übrigen drei Seitenkanten ohne Kontakt mit der Querwand vorliegt. An der freien Kante kann eine Abrisskante für die vorbeiströmende Luft ausgebildet werden, wobei sich Partikel dort abscheiden können. Durch die freie Kante wird eine Tröpfchenbildung ermöglicht, sodass die Partikel nach unten abtropfen können. Dadurch kann das Filtermodul mehr Partikel aufnehmen, da über einen längeren Zeitraum eine offene Luftführung ermöglicht wird. Insbesondere ist die Seitenkante, mit welcher das Luftleitelement die Querwand kontaktiert, mit einer Seitenkante der Öffnung verbunden. Das Luftleitelement kann beispielsweise als abgewickelter Teil der Querwand ausgebildet sein.

Das Luftleitelement kann insbesondere eine Fläche aufweisen, die kleiner oder gleich der Fläche der Öffnung ist. Insbesondere weist das Luftleitelement eine Fläche auf, die kleiner oder gleich der Hälfte der Fläche der Öffnung ausgebildet ist. So können beispielsweise rechts und links an der Öffnung, d. h. insbesondere an zwei gegenüberliegenden Seitenkante der Öffnung, zwei Luftleitelemente angeordnet sein. Die zwei gegenüberliegenden Luftleitelemente können identisch ausgeformt sein, und beispielsweise einteilig mit der Querwand als abgewinkelter Teil der Querwand ausgeformt sein.

Gemäß einer vorteilhaften Ausführungsform kann das Luftleitelement in einem Winkel von 10° bis 80°, insbesondere 40° bis 70° bezüglich der Ebene der Querwand geneigt sein. Beispielsweise kann das Luftleitelement in einem Winkel von 30 bis 45° bezüglich der Ebene der Querwand geneigt sein. Sind an zwei gegenüberliegenden Seitenkante der Öffnung Luftleitelemente vorgesehen, so können diese dieselbe Neigung aufweisen, wobei insbesondere beide Luftleitelemente in die Mitte der Öffnung weisen bzw. zur Mitte der Öffnung ausgerichtet sind. Dadurch kann eine Strömungsöffnung ausgebildet werden, die aus zwei nebeneinanderliegenden Seitenkanten der beiden Luftleitelemente resultiert.

Gemäß einer Weiterbildung kann das Luftleitelement einteilig mit der Querwand ausgeformt sein. Insbesondere kann jedes Luftleitelement als abgewinkelter Teil der Querwand ausgeformt sein, sodass ein aussparungsfreier Übergang der Querwand zu dem Luftleitelement resultiert. Das Luftleitelement kann als eine Art Flügel bzw. Lasche ausgeformt sein, die geneigt bezüglich der Ebene der Öffnung sowie der Ebene der Querwand ausgebildet ist. Um fertigungstechnisch ein Abwinkeln des Luftleitelements zu ermöglichen, können in der Knickebene zwischen dem Luftleitelement und der Querwand Schlitze vorgesehen sein. So kann das Luftleitelement zumindest aus einem Teil des Materials ausgebildet werden, das aus der Querwand entfernt wird, um die Öffnung auszubilden.

Gemäß einer Weiterbildung kann das Luftleitelement starr bezüglich der Querwand ausgerichtet sein, sodass es durch den Luftstrom nicht bewegt wird, wobei insbesondere die zumindest eine Querwand zweischichtig ausgebildet ist. Besteht die Querwand beispielsweise aus zwei Lagen, insbesondere zwei Lagen aus einem Papiermaterial, so können diese miteinander verklebt werden. Dabei können die zwei Lagen bereits in einer derartigen Ausrichtung miteinander verklebt werden, dass das zumindest eine geneigte Luftleitelement ausgeformt und durch die Klebeschicht in der abgewinkelten Position fixiert ist. Dazu kann beispielsweise eine Form und ein Presswerkzeug verwendet werden.

Gemäß einer Ausführungsform kann durch zwei Luftleitelemente ein in einer Ebene trichterförmiger Strömungsbereich ausgebildet werden, wobei die Öffnung größer als die Strömungsöffnung ausgebildet ist. Dies kann beispielsweise dadurch erreicht werden, dass an zwei gegenüberliegenden Seitenkanten der Öffnung je ein Luftleitelement angeordnet ist, wobei insbesondere die beiden Luftleitelemente in Richtung einer Mittelachse der Öffnung ausgerichtet sind. Es kann eine Art Düse ausgebildet werden, die nach dem Venturi-Prinzip die Luft beschleunigt. So kann beispielsweise auf der Mittelachse der Öffnung eine Strömungsöffnung ausgeformt werden. Es ist weiterhin denkbar, dass die beiden Luftleitelemente unterschiedlich ausgebildet sind, sodass die Strömungsöffnung nicht auf der Mittelachse der Öffnung liegt. Ist beispielsweise ein Luftleitelement weniger breit als das andere ausgebildet, so kann die Strömungsöffnung mehr im Bereich des weniger breiten Luftleitelements ausgebildet werden. Dadurch kann eine noch gezieltere Luftführung in eine gewünschte Richtung erreicht werden.

Gemäß einer Ausführungsform kann die zumindest eine Querwand quer zu einer Verbindungsebene zwischen der Eintrittsseite und der Austrittsseite ausgerichtet sein. Damit kann die Querwand quer zu einem Luftstrom ausgerichtet werden. Bevorzugt ist die Querwand orthogonal zu dem Luftstrom ausgerichtet. Dahingegen ist das Luftleitelement bevorzugt abgewinkelt zu der Verbindungsebene zwischen der Eintrittsseite und der Austrittseite ausgerichtet, sowie insbesondere abgewinkelt zu der Ebene der Querwand. Dadurch kann eine Strömung erzeugt werden, die nicht parallel zu einer Verbindungebene zwischen der Eintrittsseite und der Austrittseite ausgerichtet ist. Durch eine Mehrzahl von Öffnungen mit daran angeordneten Luftleitelementen kann dadurch die Strömung innerhalb des Filtermoduls gezielt gesteuert werden. So können beispielsweise mehrere unterschiedliche wellenförmige, und insbesondere laminare, Strömungen von der Eintrittsseite in Richtung der Austrittsseite erzielt werden.

Gemäß einer vorteilhaften Ausführungsform können die Querwände parallel zueinander angeordnet sein. Damit können alle Querwände quer zu dem Luftstrom ausgerichtet sein, sodass durch das zumindest eine Luftleitelementen der Luftstrom in der Strömungsrichtung umgelenkt wird.

Gemäß einer bevorzugten Ausführungsform können die Querwände an zumindest einer Seitenkante über eine Längsverbindung miteinander verbunden sein, sodass ein zusammenhängender Filtereinsatz ausgebildet wird. Dadurch kann ein Baukastensystem ausgebildet werden, wobei der Filtereinsatz einteilig in das Aufnahmeelement eingeschoben werden kann. Die Längsverbindung kann schwenkbar mit den Querwänden befestigt sein, sodass der Filtereinsatz zusammengeschoben werden kann, sodass die Querwände parallel angeordnet sind und sich für den Transport berühren. Es können beispielsweise zwei Längsverbindungen an zwei gegenüberliegenden Seiten angeordnet werden, in welche die Querwände eingesteckt werden.

Gemäß einer Weiterbildung können die Querwände über eine komplette Länge zwischen der Eintrittsseite und der Austrittsseite und/oder die zumindest eine Längswand über eine komplette Breite des Aufnahmeelements verlaufen, sodass lediglich ein Filtereinsatz einen Innenraum des Aufnahmeelements überspannt. Durch die gleichmäßige Verteilung der Partikel an allen Querwänden bzw. allen Längswänden ist daher ein Austausch einzelner Elemente des Filtereinsatzes nicht notwendig, um einen kontinuierlichen Betrieb zu gewährleisten.

Gemäß einer Ausführungsform kann die Eintrittsseite des Aufnahmeelements zumindest eine Öffnung aufweisen, die größer als die zumindest eine Öffnung der der Eintrittsseite nächstliegenden Querwand ist. Dadurch kann der Eintritt des zu reinigenden Luftstroms in das Aufnahmeelement optimiert werden.

Bei einer vorteilhaften Ausführungsform können das Aufnahmeelement und/oder der Filtereinsatz ein rezyklierbaren Material enthalten und/oder das Filtermodul als Papierfiltermodul ausgebildet sein. Bevorzugt bestehen die Querwände und das Aufnahmeelement aus Karton. Ein derartiges Filtermodul kann auch mit anhaftenden Partikeln einfach entsorgt, insbesondere verbrannt werden. Zudem sind die Herstellungskosten minimal.

Gemäß einer vorteilhaften Ausführungsform kann zumindest ein Sensor zum Messen der Geschwindigkeit des gereinigten Luftstroms und/oder zum Messen eines Widerstandswertes an der Austrittsöffnung angeordnet sein. Vorteilhafterweise kann dadurch festgestellt werden, wann ein Filtermodul ausgetauscht werden muss. Ist die Geschwindigkeit des gereinigten Luftstroms beispielsweise unterhalb einem Schwellenwert, kann davon ausgegangen werden, dass das Filtermodul derart verunreinigt ist, dass kaum mehr Luft hindurchströmen kann.

Gemäß einer Weiterbildung kann an der Austrittsseite innerhalb des Aufnahmeelements eine Kammer angeordnet sein, die zur Aufnahme eines Filterelements dient. Auf diese Weise ist eine Stufe zur Feinstfilterung ausbildbar, die kleinste Partikel aus dem Luftstrom herausfiltert.

Gemäß einer vorteilhaften Ausführungsform kann das Aufnahmeelement wiederverschließbar bzw. wieder öffenbar sein, wobei an einer Seitenfläche des Aufnahmeelements zumindest ein Verschlusselement ausgeformt ist. Bevorzugt kann das Verschlusselement komplett innerhalb der Seitenwand des Aufnahmeelements versenkt werden, sodass dieses ein Anordnen von mehreren Filtermodulen aufeinander bzw. nebeneinander, zur Ausbildung einer zusammenhängenden Fläche, nicht behindert.

Gemäß einer weiteren Idee kann ein Verfahren zum Zusammenbau eines Filtermoduls bereitgestellt werden. Dabei kann vor dem Aufstellen durch vollflächiges Kontaktieren der zumindest einen Längsverbindung mit den Querwänden ein im Wesentlichen zweidimensionale Struktur ohne Hohlräume vorliegen, die durch das Aufstellen zu einer dreidimensionalen Struktur mit zueinander beabstandeten Querwänden umgeformt wird, ohne dass die Querwände oder die zumindest eine Längsverbindung geknickt wird.

Vorteilhaft kann ebenso das Aufnahmeelement als im Wesentlichen zweidimensionale Struktur vorliegen, und vergleichbar zu einem Karton aufgebaut werden. Beide Elemente, d. h. das Aufnahmeelement sowie der Filtereinsatz, können dadurch platzsparend transportiert werden. Der Zusammenbau des Filtermoduls ist zudem zeitsparend und ohne Vorkenntnisse möglich.

In einer vorteilhaften Ausführungsform des Verfahrens zur Herstellung der Querwand kann eine Form und ein Presswerkzeug eingesetzt werden. Die Form kann aus zwei Formbauteilen bestehen, zwischen welchen die Querwand mit den Luftleitelementen angeordnet werden kann. In einem ersten Formbauteil kann dabei eine Auflagefläche sowie eine dazu inverse Auflagefläche in einem zweiten Formbauteil bereitgestellt werden, wobei die Auflageflächen die Form der Querwand mit den dazu abgewinkelten Luftleitelementen nachbildet. Durch Pressen der zwei Formbauteile aneinander kann dadurch die Querwand mit dem zumindest einen abgewinkelten Luftleitelement hergestellt werden. Dies kann insbesondere dadurch erreicht werden, dass die Querwand aus zwei Schichten ausgebildet ist, welche mittels einer Klebeschicht miteinander fixiert werden können. Durch die miteinander verklebten Oberflächen der zwei Schichten kann der abgewinkelte Abschnitt des Luftleitelements bezüglich der Querwand fixiert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: unterschiedliche Ausführungsformen von Querwänden eines Filtereinsatzes;
- Fig. 2: eine weitere Ausführungsformen einer Querwand eines Filtereinsatzes;
- Fig. 3: eine Ausführungsform eines Filtermoduls in einer schematischen Darstellung;
- Fig. 4: eine isometrische Darstellung eines Filtereinsatzes;
- Fig. 5: ein Strömungsverhalten innerhalb eines Filtermoduls;
- Fig. 6: eine Draufsicht auf Ausführungsformen des Filtermoduls;
- Fig. 7: eine Draufsicht auf Ausführungsformen des Filtermoduls;
- Fig. 8: Detailansichten der Luftleitelemente;
- Fig. 9: ein Verfahrensschritt bei der Herstellung einer Querwand;
- Fig. 10: eine Detailansicht der Luftleitelemente vor der Fertigstellung der Querwand;
- Fig. 11: eine Ausführungsform eines Filtermoduls in einer isometrischen Darstellung mit Detailansicht eines Verschlusselements.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

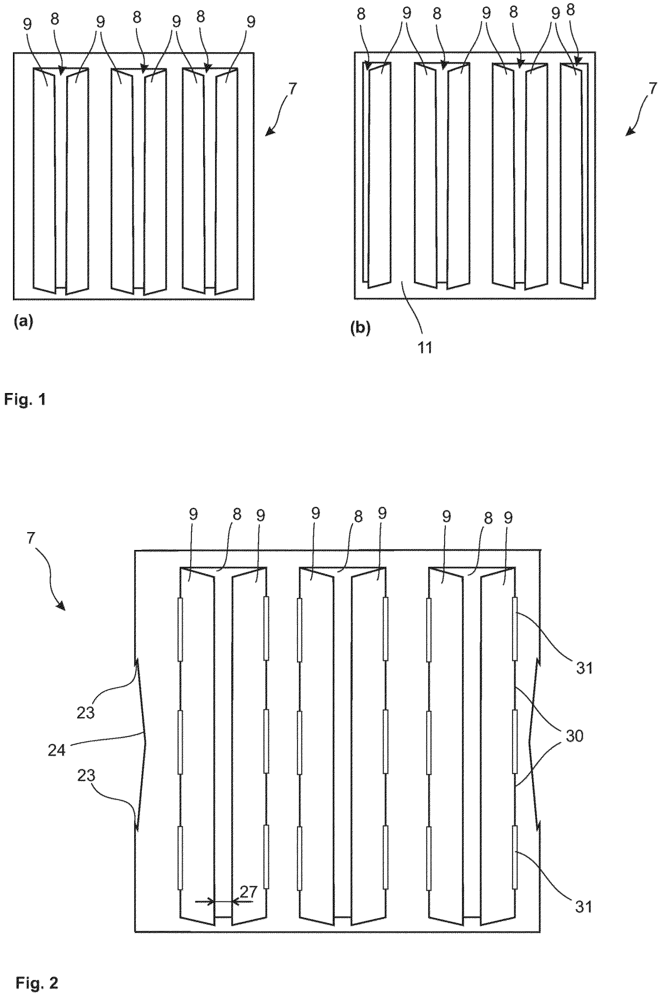

Fig. 1 zeigt unterschiedliche Ausführungsformen von Querwänden 7 eines Filtereinsatzes 6. Die Querwände 7 weisen jeweils Öffnungen 8 auf, wobei an jeder Öffnung 8 zumindest ein Luftleitelement 9 vorgesehen ist. Die Öffnungen sind schlitzförmig ausgebildet, wobei jede Öffnung 8 nahezu über eine komplette Höhe der Querwand 7 verläuft.

Wie in Figur 1(a) gezeigt, weist in dieser Ausführungsform die Querwand 7 drei Öffnungen 8 auf, wobei in jeder Öffnung 8 zwei Luftleitelemente 9 vorgesehen sind. Jedes der Luftleitelemente 9 ist mit einer Seitenkante mit der Querwand 7 kontaktiert, sodass jedes Luftleitelement 9 als eine Art Flügel bzw. als eine Art Lasche ausgeformt ist. In dieser Ausführungsform sind die jeweiligen Luftleitelemente 9 einer Öffnung 8 zu einer Mittelachse der Öffnung 8 ausgerichtet, sodass zwischen zwei freien Seitenkanten der Luftleitelemente 9 eine Strömungsöffnung 27 ausgeformt wird. Diese ist in Figur 2 gekennzeichnet. Es wäre ebenso denkbar, dass die beiden Luftleitelemente 9 eine unterschiedliche Breite aufweisen, sodass die Strömungsöffnung 27 nicht auf einer Mittelachse der Öffnung 8 liegt. Dadurch kann der Luftstrom in eine weitere gewünschte Richtung umgelenkt werden und eine Art Düse ausgebildet werden.

Die freien Seitenkanten können eine Abrisskante für die vorbeiströmende Luft ausbilden, sodass sich dort Partikel abscheiden können. Durch die freie Seitenkante wird eine Tröpfchenbildung der dort abgeschiedenen Partikel ermöglicht, sodass die Partikel nach unten in dem Filtermodul abtropfen können. Dadurch kann die Standzeit erheblich verbessert werden, da nicht alle abgeschiedenen Partikel bis zum Ende der Laufzeit des Filters an den Seitenwänden anhaften und diesen frühzeitig verstopfen. Eine offene Luftführung ist daher wesentlich länger möglich als bei bekannten Filtern mit miteinander verbundenen Quer- und Längswänden.

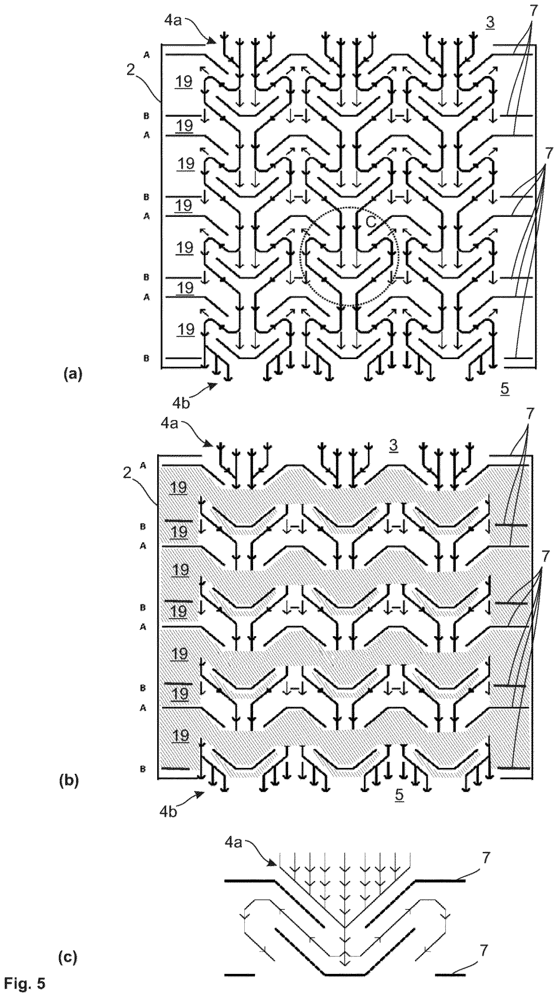

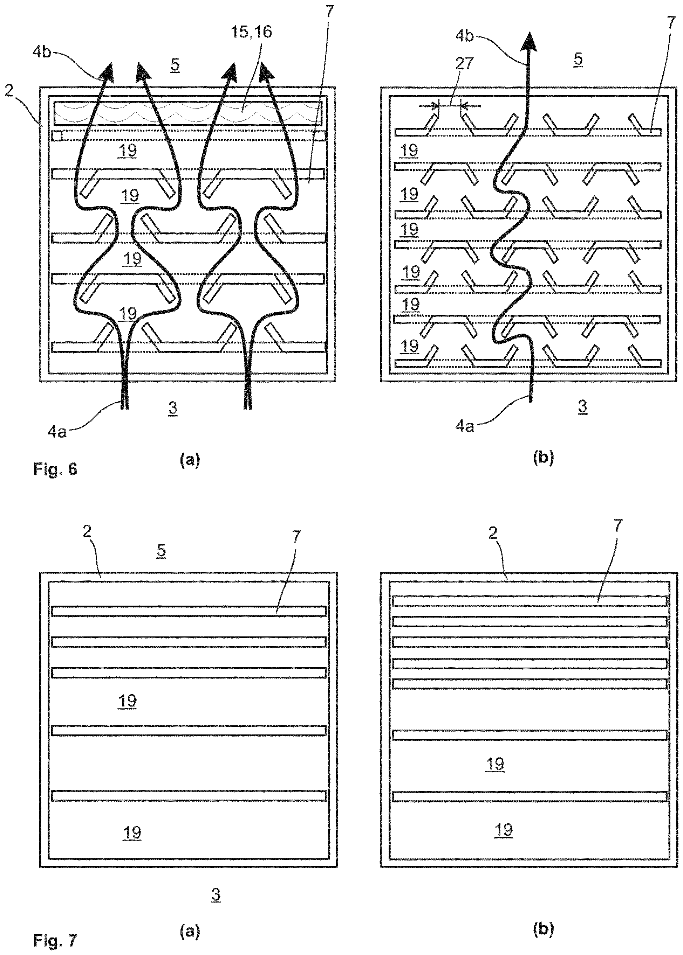

In der Ausführungsform gemäß Figur 1(b) weist die Querwand 7 vier Öffnungen 8 auf. Die beiden mittleren Öffnungen 8 sind dabei identisch zu den Öffnungen 8 in Figur 1(a) ausgeformt. Die beiden äußeren Öffnungen 8 weisen jeweils nur ein Luftleitelement 9 auf, das an einer Seitenkante mit einer Seitenkante der Öffnung 8 verbunden ist. Werden die beiden dargestellten Querwände 7 der Figuren 1(a) und 1(b) hintereinander angeordnet, so kann eine Strömung erzeugt werden, die abwechselnd Düsen und Speicherflächen bzw. Aufnahmeräume bereitstellt, wie beispielsweise in Figur 5 und 6 gezeigt.

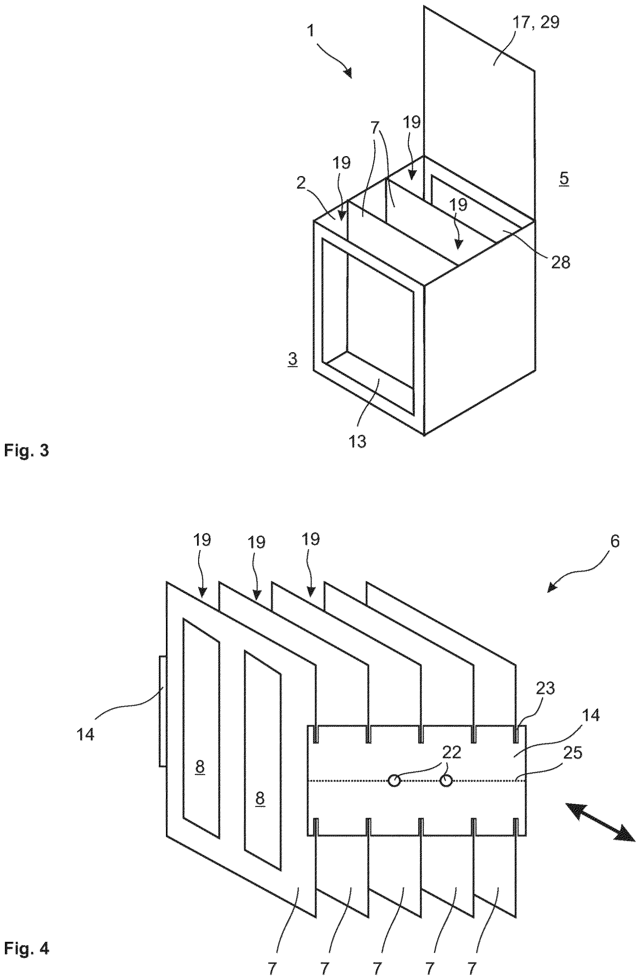

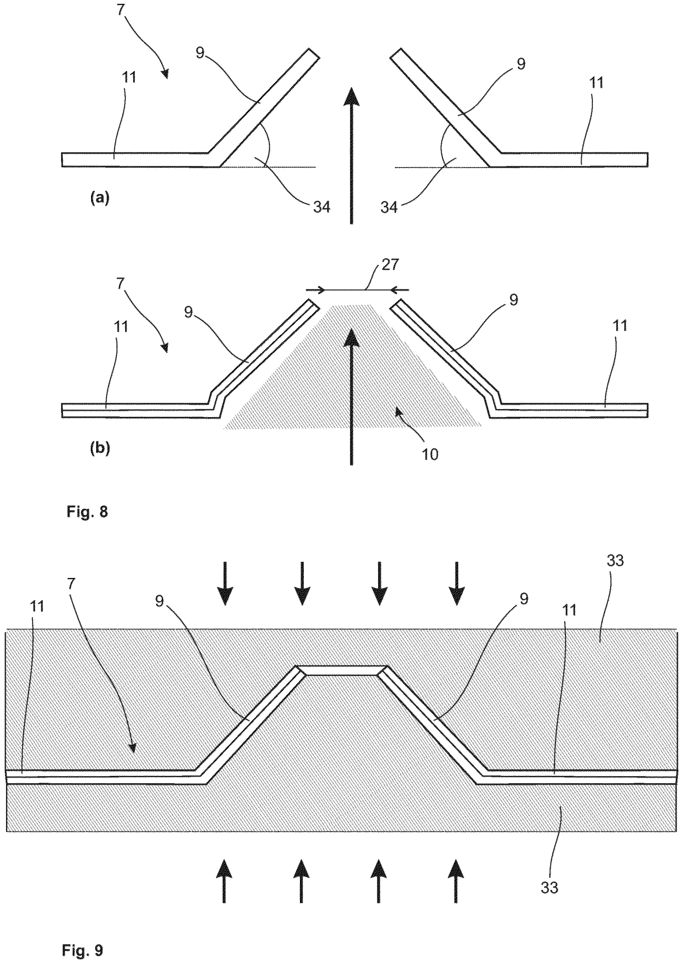

Fig. 2 zeigt eine weitere Ausführungsform einer Querwand 7 mit Öffnungen 8. Im Unterschied zur Fig. 1 ist die Querwand 7 im Detail dargestellt. Dadurch ist erkennbar, dass in dieser Ausführungsform die Luftleitelemente 9 in einer Knickebene, insbesondere in einem Falz 30, an einer Seitenkante jedes Luftleitelements 9 mehrere Schlitze 31 aufweist. Dadurch kann ein Abwinkeln des Luftleitelements 9 relativ zu einer Ebene der Querwand 7 vereinfacht werden. Des Weiteren weist die Querwand 7 an zwei gegenüberliegenden Seitenkanten Rücksprünge 24 auf, welche mit Aufnahmen 23 für eine Längsverbindung 14 ausgeformt sind, wie in Fig. 4 gezeigt. Des Weiteren ist die Strömungsöffnung 27 beispielhaft an einer Öffnung 8 dargestellt, wobei die Strömungsöffnung 27 durch zwei gegenüberliegende Seitenkanten zweier benachbarter Luftleitelemente 9 ausgeformt ist und in der Ebene versetzt zu der Ebene der Querwand 7 angeordnet ist. Die Strömungsöffnung 27 hat eine geringere Fläche als die Öffnung 8. Dadurch kann eine Düse ausgeformt werden, die einen trichterförmigen Strömungsbereich 10, wie beispielhaft in Figur 8(b) dargestellt, aufweist.

Fig. 3 zeigt ein Filtermodul 1 mit einem Aufnahmeelement 2 und einem Filtereinsatz 6 mit geöffnetem Deckel 29. Die Öffnungen 8 in den Querwänden 7 sind aus Gründen der Übersichtlichkeit nicht dargestellt. An der Eintrittsseite 3 ist eine Öffnung 13 angeordnet, die beispielsweise der Öffnung 8 (nicht dargestellt) der Querwand 7 entsprechen kann, die am nächsten an der Eintrittsseite 3 angeordnet ist. Gegenüberliegend zur Eintrittsseite 3 ist eine Austrittsseite 5 am Aufnahmeelement 2 angeordnet, die eine Öffnung 28 aufweist. Die Öffnung 28 ist bevorzugt nahezu über die komplette Seitenfläche des Aufnahmeelements 2 ausgebildet, um eine Abführung der gereinigten Luft 4b schnellstmöglich zu gewährleisten.

Unter dem Filtermodul 1, insbesondere unter dem Aufnahmeelement 2 oder auch in dem Aufnahmeelement 2, insbesondere unter dem Filtereinsatz 6 und/oder auf einem Boden des Aufnahmeelements 2, kann eine Art Auffangwanne oder Wanne angeordnet werden. Diese kann aus demselben Material wie das Filtermodul ausgebildet sein, insbesondere aus einem Pappmaterial, bevorzugt mit einer einseitig nassfesten Beschichtung. Dadurch kann ein Überlaufen des Filtermoduls und ein Verschmutzen der Anlage verhindert werden, insbesondere, wenn nasse Lacke nach unten abtropfen.

Fig. 4 zeigt eine isometrische Darstellung eines Filtereinsatzes 6. Zur Ausbildung einer dreidimensionalen Struktur sind die Querwände 7 im Wesentlichen rechtwinklig zueinander angeordnet. An einem seitlichen Ende der Querwände 7 können die Querwände 7 über Längsverbindungen 14 miteinander verbunden sein. Dafür kann jede Querwände 7 Aufnahmen 23 sowie Rücksprünge 24 aufweisen. Durch die Längsverbindungen 14 kann die dreidimensionale Struktur hergestellt werden. Die Längsverbindung 14 kann beispielsweise Ausnehmungen 22 aufweisen, in welche eine Bedienperson mit den Fingern hineingreifen kann. Dadurch kann das Längsverbindungen 14 einfach platziert werden. Vorteilhafterweise weist die Längsverbindung 14 ebenso einen Falz 25 auf, der sich über die Länge der Längsverbindung 14 erstreckt. Greift nun eine Bedienperson in die Ausnehmungen 22 mit den Fingern hinein, faltet sich die Längsverbindung 14 entlang des Falzes 25, sodass diese leichter platziert werden kann. Bevorzugt ist die Längsverbindung 14 etwas länger als der Abstand zwischen den beiden Aufnahmen 23 ausgebildet, sodass diese sicher dazwischen verspannt werden kann.

Fig. 5 zeigt ein Strömungsverhalten innerhalb eines Filtermoduls. Die Querwände 7 sind jeweils gespiegelt zueinander angeordnet, sodass die Luftleitelemente 9 benachbarter Querwände 7 entweder zueinander ausgerichtet sind, oder voneinander weg weisen. Demnach sind die Querwände 7 abwechselnd entweder wie in Position A oder wie in Position B dargestellt ausgerichtet. So werden entweder Düsen oder u-förmige bzw. V-förmige Aufnahmen ausgebildet. Dadurch wird der Luftstrom 4 wie dargestellt schlangenlinienförmig umgeleitet. Insbesondere kann der Abstand, d. h. der Hohlraum 19, von A zu B größer sein als der Abstand von B zu A, sodass die Strömung optimiert werden kann.

Wenn der zu reinigende Luftstrom 4a durch eine Öffnung 8 der ersten Querwand 7 (oberste Querwand in der Darstellung, die mit A gekennzeichnet ist) durch die jeweils zwei Luftleitelemente 9 strömt, so wird der Luftstrom 4a entsprechend dem Venturi-Prinzip beschleunigt. Die Luft mit den Partikeln prallt gegen die nächste Querwand 7 (mit B gekennzeichnet), wobei die Querwand 7 in dem Bereich einen, insbesondere u-förmigen oder v-förmigen, Aufnahmebereich durch zwei Luftleitelemente 9 benachbarter Öffnungen 8 aufweist. In dem Aufnahmebereich können sich Partikel ansammeln, wobei diese durch Umlenkung der Luft entsprechend dem Newton-Gesetz abgeschieden werden. Die Partikel werden daher in der Beschleunigungsrichtung nicht abgelenkt und landen in dem Aufnahmebereich, während die Luft umgelenkt wird. Die Richtung der Partikel ist durch die kleinen Pfeile dargestellt, die in Richtung der u-förmigen bzw. v-förmigen Aufnahmebereiche zeigen, die Richtung der Luft ist durch die zusammenhängenden und umgelenkten Pfeile gekennzeichnet. Die Aufnahmebereiche sind in Fig. 5 (b) durch die gestrichelten Bereiche gekennzeichnet, weshalb die Strömungspfeile teilweise überdeckt dargestellt sind. Es sei daher darauf hingewiesen, dass die Strömung der Fig. 5 (b) der aus Fig. 5 (a) entspricht. Die Luftleitelemente 9 der zweiten Querwand (oberste Querwand B) sind in Richtung der ersten Querwand 7 (oberste Querwand A) ausgerichtet. Dadurch wird die Luft wieder in Richtung der ersten Querwand beschleunigt, wobei sich sozusagen aus der Rückseite der ersten Querwand 7 weitere Partikel in einem Aufnahmebereich abscheiden können. So scheiden sich in den gestrichelten Flächen in Fig. 5 (b) kontinuierlich Partikel ab, wodurch die Luft aufgrund der schmäler werdenden Düse immer weiter beschleunigt wird. Insbesondere kann dadurch Energie eingespart werden, bevorzugt mehr als 30 % im Vergleich zu bekannten Filtern, da durch die offene Luftführung der Luftwiederstand (Differenzdruck) langanhaltend niedrig gehalten werden kann.

In Fig. 5 (c) ist das Detail C aus Fig. 5 (a) dargestellt, wobei die Luftführung durch die Luftleitelemente 9 und die Umlenkung der Luft durch die Luftleitelemente 9 der benachbarten Querwand 7 gezeigt ist. Hierbei ist die Düsenform erkennbar, wobei die Luftleitelemente 9 der ersten Querwand 7 (oben) insbesondere eine Flachdüse ausbilden. Des Weiteren ist der Aufnahmebereich durch die zweite Querwand 7 (unten) erkennbar, wobei die Luft durch die Luftleitelemente 9 der zweiten Querwand umgelenkt wird, nämlich in Richtung der ersten Querwand 7. Anschließend wird die Luft wieder in Richtung der zweiten Querwand 7 umgeleitet, strömt dann durch die Öffnungen 8 der zweiten Querwand 7 und durch die Luftleitelemente 9 einer dritten Querwand (nicht dargestellt.) Anschließend wiederholt sich das Prinzip, wobei die Luft durch die Luftleitelemente 9 der dritten Querwand 7, die eine Düsenform ausbilden, beschleunigt wird.

Fig. 6 zeigt zwei Draufsichten bzw. Schnittdarstellungen auf zwei weitere Ausführungsformen. Die Richtung der Luftströmung 4 ist durch die Pfeile dargestellt. Jede der Luftströmungen 4 ist dabei als wellenförmige bzw. schlangenlinienförmige Strömung ausgebildet. Eine derartige Strömung kann insbesondere dadurch ausgebildet werden, dass abwechselnd zwei unterschiedliche Ausführungsformen von Querwänden 7 hintereinander angeordnet sind. Die beiden Ausführungsformen können dabei wie in Figur 1 ausgeführt sein. Werden derartige Querwände 7 mit dazwischenliegenden Hohlräumen 19 angeordnet, kann die Luftströmung 4 wellenförmig durch die Öffnungen 8 geführt werden. Durch die jeweiligen Querwände7, bei denen die Luftleitelemente 9 einen trichterförmigen Strömungsbereich ausbilden, kann der Luftstrom beschleunigt werde. Durch die jeweils darauffolgend Querwand 7 kann durch die Luftleitelemente 9 ein Aufnahmebereich bzw. eine Speicherfläche für abgeschiedene Partikel ausgebildet werden.

In Figur 6 sind zwei Ausführungsformen dargestellt, wobei diese jeweils eine unterschiedliche Anzahl an Öffnungen 8 sowie eine unterschiedliche Anzahl an Querwänden 7 aufweist.

Diese sind beispielhaft, wobei davon abweichende Anordnungen möglich sind.

In Fig. 6 (a) weist das Aufnahmeelement 2 an der Austrittsseite 5 eine Kammer 15 auf, in welcher ein Filterelement 16 angeordnet ist. Der Filter ist insbesondere als integrierter Fein- und/oder Nachfilter ausgebildet. Dadurch kann die zu reinigende Luft 4a in einem letzten Schritt feinstgereinigt werden.

Fig. 7(a) und 7(b) zeigen jeweils eine Draufsicht auf eine weitere Ausführungsform. In dieser Ausführungsform sind die Querwände 7 in unterschiedlichen Abständen zueinander angeordnet (die Luftleitelement sind nicht dargestellt). Bevorzugt sind die Querwände 7 im Bereich der Eintrittsseite 3 mit einem größeren Abstand zueinander angeordnet, da in diesem Bereich die meisten Partikel aus der zu reinigenden Luft an dem Filtereinsatz 6 anhaften. Im Bereich der Austrittsseite 5 sind die Querwände 7 näher beieinander angeordnet. Dadurch kann eine Feinreinigung der Luftströmung erfolgen. Bei einer derartigen Anordnung kann besonders bevorzugt eine gleichmäßige Verteilung der Partikel über den kompletten Filtereinsatz 6 erreicht werden, sodass das Filtermodul 1 über einen besonders langen Zeitraum effektiv verwendet werden kann.

Jede Querwand der Fig. 6 und 7 kann beispielsweise wie in Fig. 1 oder 2 ausgebildet sein.

Fig. 8 zeigt die Luftführung durch eine Öffnung 8 mit zwei Luftleitelementen 9 im Detail. Gemäß Figur 8(a) ist die Querwand 7 mit den beiden Luftleitelementen 9 einteilig ausgeformt, und aus einem Bauteil hergestellt. Gemäß Figur 8(b) ist die Querwand 7 mit den beiden Luftleitelementen 9 zweischichtig ausgeformt, wobei die beiden Schichten über eine Klebeverbindung oder Klebeschicht miteinander verbunden sind. Mit beiden Ausführungsformen kann in der Ebene der Querwand 7 eine Art Rahmenelement 11 ausgeformt werden, das um die Öffnungen 8 ausgeformt ist. Die Luftleitelemente 9 sind abgewinkelt in einem Winkel 34 zu der Ebene der Querwand 7 bzw. des Rahmenelements 11 ausgeformt, und auf einer Seite der Querwand 7 angeordnet. Gemäß einer vorteilhaften Ausführungsform kann der Winkel 34 zwischen 10° bis 80°, insbesondere 40° bis 70° betragen. Beispielsweise kann das Luftleitelement 9 in einem Winkel 34 von 30 bis 45° bezüglich der Ebene der Querwand 7 geneigt sein. Es wäre ebenso denkbar, dass die beiden Luftleitelemente 9 in zwei unterschiedliche Richtungen bezüglich der Eben der Querwand 7 ausgerichtet sind, in der Darstellung demnach eines nach oben und eines nach unten.

Fig. 9 zeigt ein Verfahren zur Herstellung, wobei zwei Formbauteile 33 als Presswerkzeuge dienen. Auf einer Oberfläche der Formbauteile 33 ist die Form der Querwand 7 nachgebildet, wobei ein zweites Formbauteil 33 die inverse Oberfläche zu einem ersten Formbauteil 33 aufweist. Durch Pressen, dargestellt in der Pfeilrichtung, kann die abgewinkelte Ausrichtung der Luftleitelemente 9 bezüglich der Querwand 7 bzw. des Rahmenelements 11 erreicht werden. Dies kann insbesondere dadurch erzielt werden, dass die Querwand 7 sowie die Luftleitelemente 9 zweischichtig ausgeformt sind, wobei an zueinander ausgerichteten Oberflächen der Schichten eine Klebeverbindung ausgebildet wird. Härtet diese Klebeschicht aus, so können die Luftleitelemente 9 abgewinkelt zu der Ebene der Querwand 7 fixiert werden.

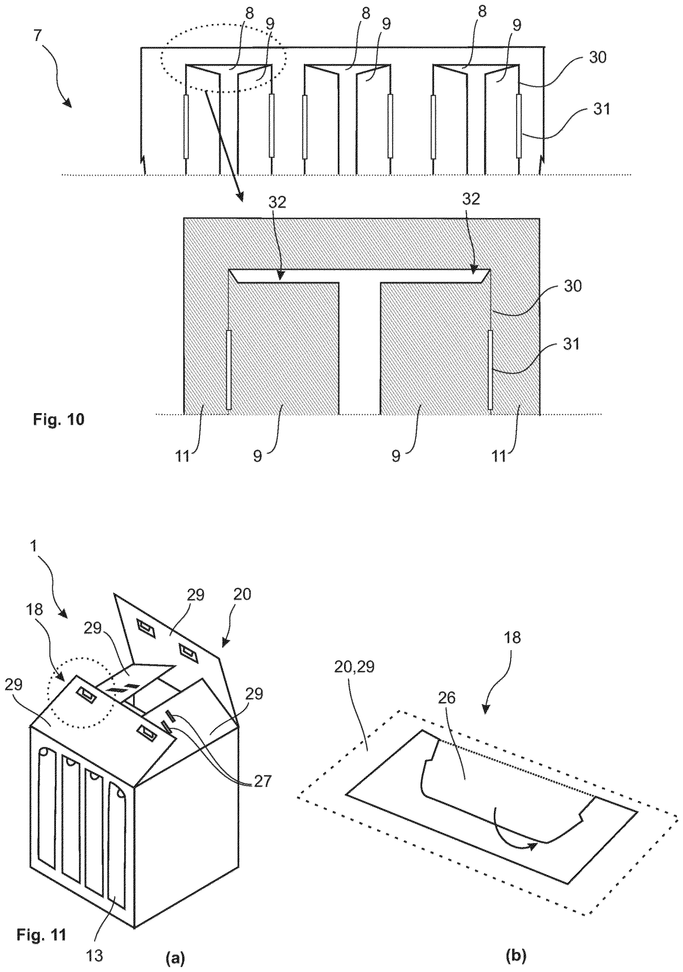

In Fig. 10 zeigt die Geometrie der Luftleitelemente 9 bezüglich der Öffnung 8 im Detail. In der vergrößerten Darstellung sind dabei die Luftleitelemente 9 dargestellt, bevor diese abgewinkelt zu der Ebene der Querwand 7 ausgerichtet sind. Hierbei ist erkennbar, dass die Luftleitelemente 9 aus einem Teil des Materials ausgebildet werden, welches aus der Öffnung 8 entfernt wird und/oder welches aus dem Rahmenelement der Querwand 7 anhängend ist. Um ein Abwinkeln der Luftleitelemente 9 relativ zu der Ebene der Querwand 7, d. h. relativ zu dem Rahmenelement 11, zu ermöglichen, können insbesondere mehrere Schlitze 31 in einer Knickebene zwischen dem Luftleitelementen 9 und der Querwand 7 bzw. der Öffnung 8 vorgesehen sein. Die Knickebene wird durch den Falz 30 beschrieben. Um weiterhin die Herstellung zu optimieren, können Aussparungen 32 vorgesehen sein, sodass die Luftleitelemente 9 lediglich mit einer Seitenkante mit der Querwand 7 verbunden sind, und an den drei weiteren Seitenkanten beabstandet zu der Öffnung 8 bzw. der Querwand 7 ausgeformt sind. Dadurch kann ein Abwinkeln der Luftleitelemente 9 relativ zu der Ebene der Querwand bzw. zu dem Rahmenelement 11 vereinfacht werden.

Fig. 11 zeigt eine Ausführungsform eines Filtermoduls 6 in einer isometrischen Darstellung mit Detailansicht eines Verschlusselements 18. Die Verschlusselemente 18 sind an der Oberseite 20 des Aufnahmeelements 2 angeordnet. Die Oberseite 20 weist vier Elemente auf, die gemeinsam einen Deckel 29 ausbilden. An zwei der Elemente sind jeweils zwei Verschlusselemente 18 angeordnet. Zwei weitere Elemente des Deckels 29 weisen jeweils zwei Schlitze 27 auf. Die Schlitze 27 sind versetzt zueinander angeordnet. Folglich sind auch die Verschlusselemente 18 in gleicher Weise versetzt zueinander angeordnet.

In der Detailansicht in Fig. 11(b) ist erkennbar, dass das Verschlusselement 18 aus einer Lasche 26 besteht, die in einen Schlitz 27 in einem weiteren Element des Deckels 29 eingreifen kann. Die Lasche 26 wird von oben in den Schlitz 27 eingeführt und in Pfeilrichtung umgebogen. Dadurch weist das Aufnahmeelement 2 eine ebene Oberseite 20 auf. Die Oberseite 20 ist vergleichbar zu einem Verpackungskarton ausgestaltet, aufweisende zwei innen liegende Laschen sowie zwei außenliegende Laschen, die gemeinsam einen Deckel 29 ausbilden.

In dieser Ausführungsform weist das Aufnahmeelement 2 an der Seitenfläche, die eine Eintrittsseite 3 ausbildet, vier im Wesentlichen rechteckige Öffnungen 13 auf. Vor Benutzung des Filtermoduls 1 können diese durch abnehmbare Elemente verschlossen sein, um ein Verschmutzen des Filtereinsatzes 6 zu verhindern. Über Eingriffslöcher bzw. Ausnehmungen können diese abnehmbaren Elemente leicht händisch entfernt werden. Dafür ist die Form der Öffnungen 13 bevorzugt durch eine Perforation vorgezeichnet. Ebenso kann an der Austrittsseite 5 die Öffnung 28 zunächst durch ein abnehmbares Element verschlossen sein.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

So können beispielsweise die Öffnungen 8 unterschiedliche Ausgestaltungen aufweisen. Dabei kann die Form von der dargestellten rechteckigen bzw. quadratischen Schlitzform abweichen. Ebenso kann die Anordnung der Öffnungen von der dargestellten Weise abweichen. Des Weiteren können die Luftleitelemente 9 von den Darstellungen unterschiedliche geometrische Ausgestaltungen aufweisen oder unterschiedlich bezüglich der Ebene der Querwand 7 abgewinkelt sein.

### Bezugszeichenliste

- 1: Filtermodul
- 2: Aufnahmeelement
- 3: Eintrittsseite
- 4: Luftstrom
- 5: Austrittsseite
- 6: Filtereinsatz
- 7: Querwand
- 8: Öffnung der Querwand
- 9: Luftleitelement
- 10: Strömungsbereich
- 11: Rahmenelement
- 12: Innenraum
- 13: Öffnung der Eintrittsseite
- 14: Längsverbindung
- 15: Kammer
- 16: Filtermaterial
- 17: Seitenfläche
- 18: Verschlusselement
- 19: Hohlraum
- 20: Oberseite
- 21: Plattenelement
- 22: Ausnehmung
- 23: Aufnahme der Querwand
- 24: Rücksprung
- 25: Falz
- 26: Lasche
- 27: Strömungsöffnung
- 28: Öffnung der Austrittsseite
- 29: Deckel
- 30: Falz
- 31: Schlitz
- 32: Aussparung
- 33: Formbauteil
- 34: Winkel

## Patentansprüche

1. Filtermodul (1), zur Abscheidung von Partikeln aus verunreinigter Luft, insbesondere zur Abscheidung von Farbpartikeln aus einem Luftstrom,
mit einem Aufnahmeelement (2), das eine Eintrittsseite (3), für den Eintritt eines zu reinigenden Luftstroms (4a), und eine Austrittsseite (5), für den Austritt des gereinigten Luftstroms (4b), aufweist, wobei die Eintrittsseite (3) und die Austrittsseite (5) gegenüberliegend an dem Aufnahmeelement (2) angeordnet sind,
mit zumindest einem Filtereinsatz (6), der in dem Aufnahmeelement (2) aufgenommen ist,
wobei der Filtereinsatz (6) zumindest eine Querwand (7) mit zumindest einer Öffnung (8) aufweist, wobei an der Öffnung (8) zumindest ein Luftleitelement (9) angeordnet ist, das bezüglich einer Ebene der Querwand (8) geneigt angeordnet ist, sodass der Luftstrom (4) von der Eintrittsseite (3) in Richtung der Austrittsseite (5) durch das Luftleitelement (9) ablenkbar ist.

2. Filtermodul nach Anspruch 1,
**dadurch gekennzeichnet,**
**dass** an der Öffnung (8) zwei Luftleitelemente (9) angeordnet sind, sodass eine Strömungsöffnung (27) ausgebildet wird, die versetzt zu der Öffnung in der Querwand (7) ausgebildet ist, und der Luftstrom (4) durch die Strömungsöffnung (27) strömen kann.

3. Filtermodul nach einem der vorstehenden Ansprüche,
**dadurch gekennzeichnet,**
**dass** die zumindest eine Querwand (7) zumindest drei Öffnungen (8) aufweist, wobei an jeder Öffnung (8) zumindest ein Luftleitelement (9) angeordnet ist, und /oder dass insbesondere die zumindest eine Öffnung (8) schlitzförmig ausgebildet ist, wobei die Öffnung nahezu über eine komplette Breite oder eine komplette Höhe der Querwand (7) verläuft.

4. Filtermodul nach einem der vorstehenden Ansprüche,
**dadurch gekennzeichnet,**
**dass** eine Mehrzahl an Querwänden (7) parallel zueinander in dem Aufnahmeelement (2) angeordnet ist, wobei bei hintereinander angeordneten Querwänden (7) die Öffnungen (8) versetzt zueinander angeordnet sind, und wobei die Luftleitelemente (9) benachbarter Querwände (8) bezüglich der Ebene der jeweiligen Querwand (8) insbesondere auf gegenüberliegende Seiten ausgerichtet sind, sodass die Luftleitelemente (9) benachbarter Querwände (8) entweder zueinander ausgerichtet sind, oder voneinander weg weisen.

5. Filtermodul nach Anspruch 4,
**dadurch gekennzeichnet,**
**dass** der Filtereinsatz (6) zumindest zwei, insbesondere drei bis zehn, Querwände (7) aufweist.

6. Filtermodul nach einem der vorstehenden Ansprüche,
**dadurch gekennzeichnet,**
**dass** das Luftleitelement (9) mit einer Seitenkante die Querwand (7) kontaktiert, und insbesondere übrige Seitenkanten des Luftleitelements (9) als freie Kanten ausgebildet sind.

7. Filtermodul nach einem der vorstehenden Ansprüche,
**dadurch gekennzeichnet,**
**dass** das Luftleitelement (9) in einem Winkel von 10° bis 80°, insbesondere 40° bis 70° bezüglich der Ebene der Querwand (7) geneigt ist.

8. Filtermodul nach einem der vorstehenden Ansprüche,
**dadurch gekennzeichnet,**
**dass** das Luftleitelement (9) einteilig mit der Querwand (7) ausgeformt ist.

9. Filtermodul nach einem der vorstehenden Ansprüche,
**dadurch gekennzeichnet,**
**dass** das Luftleitelement (9) starr bezüglich der Querwand (7) ausgerichtet ist, sodass es durch den Luftstrom (4) nicht bewegt wird, wobei insbesondere die zumindest eine Querwand (7) zweischichtig ausgebildet ist.

10. Filtermodul nach einem der Ansprüche 2 bis 9,
**dadurch gekennzeichnet,**
**dass** durch zwei Luftleitelemente (9) ein in einer Ebene trichterförmiger Strömungsbereich (10) ausgebildet ist, wobei die Öffnung (8) größer als die Strömungsöffnung (27) ausgebildet ist.

11. Filtermodul nach einem der vorstehenden Ansprüche,
**dadurch gekennzeichnet,**
**dass** die zumindest eine Querwand (7) quer zu einer Verbindungsebene zwischen der Eintrittsseite (9) und der Austrittsseite (8) ausgerichtet sind, und das zumindest eine Luftleitelement (9) abgewinkelt zwischen der Eintrittsseite (9) und der Austrittsseite (8) ausgerichtet ist.

12. Filtermodul nach einem der vorstehenden Ansprüche,
**dadurch gekennzeichnet,**
**dass** die Querwände (7) an zumindest einer Seitenkante über eine Längsverbindung (14) miteinander verbunden sind, sodass ein zusammenhängender Filtereinsatz (6) ausgebildet wird, und/oder dass die zumindest eine Querwand (7) über eine komplette Breite des Aufnahmeelements (2) verläuft, sodass lediglich ein Filtereinsatz (6) einen Innenraum (12) des Aufnahmeelements (2) überspannt.

13. Filtermodul nach einem der vorstehenden Ansprüche,
**dadurch gekennzeichnet,**
**dass** die Eintrittsseite (3) des Aufnahmeelements (2) zumindest eine Öffnung (13) aufweist, die größer als die zumindest eine Öffnung (8) der der Eintrittsseite (3) nächstliegenden Querwand (7) entspricht.

14. Filtermodul nach einem der vorstehenden Ansprüche,
**dadurch gekennzeichnet,**
**dass** das Aufnahmeelement (2) und/oder der Filtereinsatz (6) ein rezyklierbaren Material enthalten.

15. Verfahren zur Herstellung einer Querwand für ein Filtermodul nach einem der Ansprüche 1 bis 14,
**dadurch gekennzeichnet,**
**dass** die Querwand (7) und das Luftleitelement (9) einteilig ausgeformt sind, wobei durch ein Pressverfahren die Neigung des Luftleitelements (9) relativ zu der Querwand (7) ausgebildet wird, wobei insbesondere durch ein sich versteifenden Klebematerial das Luftleitelement (9) in einem vorbestimmten Winkel (34) bezüglich der Ebene der Querwand (7) unbeweglich fixiert wird.
